# EUROPEAN PATENT SPECIFICATION

(11) **EP 4 252 084 B1**
(45) Date of publication and mention of the grant of the patent: **26.02.2025**
(21) Application number: 20816915.1
(22) Date of filing: 25.11.2020
(51) Int. Cl.: G05B 13/02, G05B 19/042

(54) **CONTROLLER AND METHOD FOR CONTROLLING PERFORMANCE OF A SYSTEM**
STEUERUNG UND VERFAHREN ZUR STEUERUNG DER LEISTUNG EINES SYSTEMS
CONTRÔLEUR ET PROCÉDÉ DE CONTRÔLE DE LA PERFORMANCE D'UN SYSTÈME

(43) Date of publication of application: 04.10.2023
(73) Proprietor: Eaton Intelligent Power Limited, Dublin 4 (IE)
(72) Inventor: DUTTA, Sourav, Dublin Dublin, 15 (IE); BROCKETT, Neil, Dublin Dublin, V31Y102 (IE); CLARKE, Catriona, Dublin, W12FW77 (IE); BERLINGERIO, Michele, Dublin Dublin, 15 (IE)
(74) Representative: Derry, Paul Stefan
(86) International application number: PCT/EP2020/083442
(87) International publication number: WO 2022/111806

(56) References cited:
- EP-A1- 3 244 277
- US-A1- 2015 301 543
- US-A1- 2020 319 259

## Description

### TECHNICAL FIELD

The disclosure provides a controller for controlling a system having a plurality of system objects and, in particular, for controlling system performance according to a performance metric based on a state of each of the system objects.

### BACKGROUND

Complex systems comprise many objects, components and/or data that interact with each other. In particular, a complex system is a system in which the overall performance or behaviour of the system is difficult to model, predict and/or control because the interactions and relationships of the components with each other and their environment are numerous and potentially complex.

The overall performance or behaviour of a system may be measured using one or a series of metrics. There may be a desire for a system to attain or maintain a certain level of performance as defined by one or more such performance metrics. The metrics may be referred to as key performance indicators (KPIs), which typically quantify different aspects of a system's performance over a period of time to gauge overall performance of the system.

On the other hand, it can also be important to ensure that a behaviour or state of individual components within the system are at acceptable or desired levels, e.g. a process performed by the component. Interventions or actions to correct or otherwise modify behaviour may typically be taken at an individual component level, although the same action may be applied to several components.

There can be a trade off between behaviour of one or more individual components in a system and the overall performance of the system. That is, actions taken to improve some aspect of one or more individual components may in fact negatively impact overall performance of the system, or at least an aspect of overall performance of the system.

More specifically, a modifying action applied to an individual component to improve its local performance can have propagating effects on other components of the system, which in turn can reduce global performance of the system. The complexity of the relationships between components of the system mean that there is uncertainty as to the existence or exact nature of the propagation effects prior to application.

It is against this background to which the present invention is set.

US 2015/301543 A1 describes a household energy management system and method, having one or more controlled appliances and an energy profile representing energy consumption, with one or more associated parameters and limits. The method comprises assigning each of said controlled appliances a control class, collecting one or more variables, determining a first group of said appliances based on the control class of said appliances and said variables and said parameters, requesting a change in the power consumption of the appliances of said first group, measuring the energy consumption of the household, calculating a difference between said household energy profile and measured energy consumption, determining a second group of said appliances different from said first group based on the control class of said appliances and said variables and said parameters, communicating a proposed change in the power consumption of the appliances of said second group when said difference surpasses said one or more associated limits, and requesting a change in the power consumption of one or more appliances of said second group upon receiving of one or more requests received in response of said communication.

EP 3 244 277 A1 describes recording a sequence of control system operator actions, identifying a control system process corresponding to the recorded sequence of control system operator actions, retrieving a standard operating procedure associated with the identified control system process, determining a first set of deviations between the recorded sequence of control system operator actions and the standard operating procedure, determining a second set of deviations between a set of KPI values associated with the recorded sequence of control system operator actions and a set of KPI values associated with the standard operating procedure, and modifying the standard operating procedure to reduce deviation between the recorded sequence of control system operator actions and said standard operating procedure.

US 2020/319259 A1 describes a system including a first group of sensors and a control circuit including one or more processors. The first group of sensors is associated with an energy storage module having one or more energy storage devices. The sensors in the first group generate sensor measurements representing one or more parameters of the energy storage module. The control circuit is configured to receive the sensor measurements and determine one or more of a reference value or a reference variation of a specific parameter related to the energy storage module based at least in part on the sensor measurements. The control circuit compares one or more of monitored values or monitored variations of the specific parameter, based on the sensor measurements generated by sensors, to the reference value or the reference variation of the specific parameter and detects a deviation that is greater than a designated tolerance margin.

### SUMMARY OF THE INVENTION

The present invention is set out in the appended set of claims.

According to an aspect of the disclosure there is provided a controller for controlling a system having a plurality of system objects, elements or parameters. The controller is for controlling system performance according to a performance metric based on a state of each of the system objects. The controller comprises one or more processors configured to implement functional modules of the controller. The controller includes a first detection module - or change detection module - configured to detect a change in state of at least one first object from the plurality of system objects. The controller includes a first modification module - or personalised action recommendation module - configured to determine a first modifying action to the at least one first object in response to the detected change in state, and to output the first modifying action to be applied to the at least one first object. The controller includes a second detection module - propagation detection module - configured to detect a change in state of at least one second object from the plurality of system objects different from the at least one first object, after the first modifying action is applied to the at least one first object. The controller includes a second modification module - or mitigating action recommendation module - configured to determine a second modifying action to be applied to the system to improve system performance according to the performance metric after the first modifying action is applied, and to output the second modifying action to be applied to the system.

The second modifying action may include a modification to be applied to the at least one second object.

The second detection module may be configured to receive data indicative of the state of each of the plurality of system objects after the first modifying action has been applied. The second detection module may be configured to compare the received state of each of the plurality of system objects other than the at least one first system object with the state of the respective system object prior to the first modifying action being applied in order to detect the change in state of the at least one second system object.

The second modification module may be configured to determine the second modifying action from a plurality of candidate second modifying actions retrieved by the second modification module.

The detected change in state of the at least one second object may correspond to an indication that a demand of resources from the system is no longer being met.

The second modification module may be configured to determine the system performance according to the performance metric after the first modifying action is applied. The second modification module may be configured to determine the second modifying action only if the determined system performance has decreased or reduced from prior to the first modifying action being applied.

The first detection module may be configured to receive data indicative of the state of each of the plurality of system objects at a given time. The first detection module may be configured to compare the state of each of the plurality of system objects at the given time with the state of the respective system object at a time prior to the given time in order to detect the change in state of the at least one first system object.

The first modification module may be configured to determine the first modifying action from a plurality of candidate first modifying actions retrieved by the first modification module.

The detected change in state of the at least one first object may correspond to a detected change in demand of resources provided by the system.

The first modifying action may be to satisfy the detected changed demand of resources.

In some examples, each system object has one or more attributes each having a value that is variable over time, the state of each system object being defined by the value of each of its attributes at a given time, and the change in state of one of the system objects corresponds to a change in the value of at least one of its attributes.

According to another aspect of the disclosure there is provided a computer-implemented method for controlling a system having a plurality of system objects according to claim 12.

According to another aspect of the disclosure there is provided a non-transitory, computer-readable storage medium storing instructions thereon that when executed by one or more processors causes the one or more processors to perform the method described above.

### BRIEF DESCRIPTION OF THE DRAWINGS

Examples of the disclosure will now be described with reference to the accompanying drawings, in which:
Figure 1 schematically illustrates a system having a number of system objects and a data store, and a controller according to an example of an aspect of the disclosure, the controller being for controlling the system;
Figure 2 illustrates functional modules of the controller of Figure 1; and,
Figure 3 shows the steps of a method performed by the controller of Figure 1.

### DETAILED DESCRIPTION

In the following, there is described a controller and method for controlling a system, in which an aggregate action is applied to objects or components of the system that are affected by a modifying action applied to a different object or component of the system, to mitigate an adverse effect on overall performance of the system as a result of the modifying action.

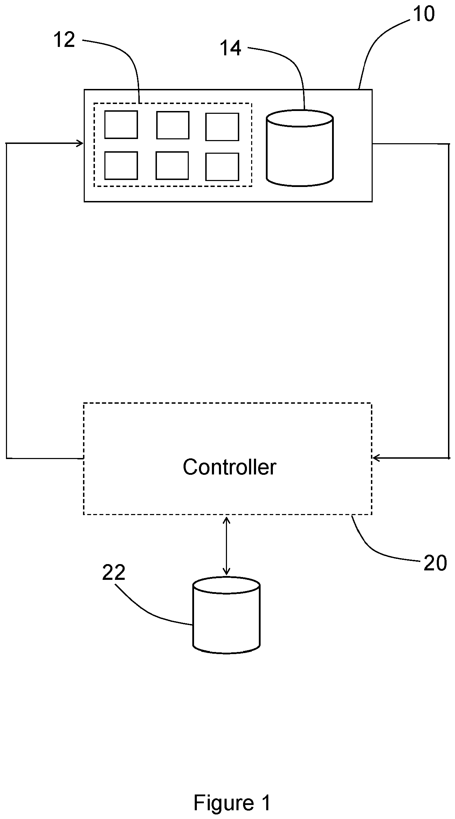

Figure 1 schematically illustrates a complex system 10 including a number of components or objects 12. Each of the objects 12 includes one or more attributes, and a value or state of each attribute contributes to a state of the object 12. The values of the attributes are variable over time such that the state of each object 12 can change over time.

The objects 12 interact according to complex, nonlinear relationships, in particular relationships that are not explicitly defined. As such, changes in the dynamics or operation of a particular object 12 can cause changes in not only its own state, but in the state of one or more other objects 12 in the system. The attributes and/or state of the different objects 12 in the system 10 are monitored over time, and current - and possibly historical - values or states thereof are stored in a data store or memory 14 of, or associated with, the system 10.

The state of different objects 12 in the system 10 can change over time according to normal operation and interaction of the objects 12. However, external actions can also be applied to one or more of the objects 12 which can cause a change in state of not just the object to which the action is applied, but also to other objects 12 in the system 10 through propagation effects of the action according to the nonlinear relationships in the system 10.

Figure 1 illustrates a controller 20 for determining such external actions to be applied to one or more objects 12 of the system 10, as will be discussed in greater detail below. The controller 20 receives data indicative of a current and/or historical state of one or more of the objects 12 in order to make such a determination, and outputs the determined action to be applied. Figure 1 also shows a database or memory 22 for storing an array of possible actions that may be applied to the objects 12, and the controller 20 can access the database 22 to retrieve the possible actions when determining a particular action that is to be applied to one or more of the objects 12.

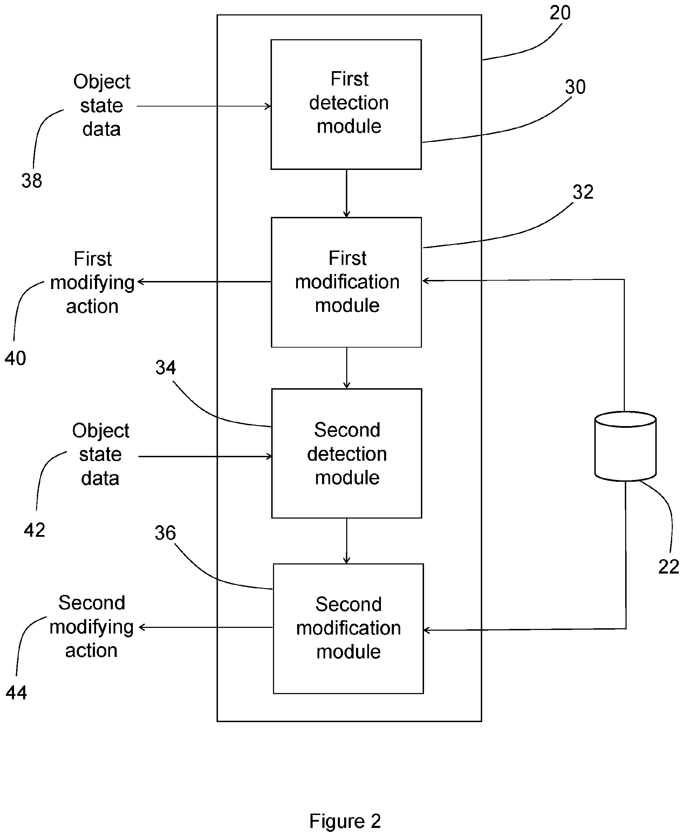

Figure 2 schematically illustrates a specific example implementing the controller 20. Four functional elements, units or modules are shown - a first detection module 30, a first modification module 32, a second detection module 34 and a second modification module 36. Each of these modules may be provided by suitable software running on any suitable computing substrate using conventional or customer processors and memory. In particular, each of the modules may use a common computing substrate (for example, they may run on the same server) or separate substrates, or one or each may themselves be distributed between multiple computing devices. Specifically, the controller 20 comprises one or more processors configured to implement the functional modules 30, 32, 34, 36.

The first detection module 30 - or change detection module - receives data 38 indicative of the state of each of the plurality of objects 12 of the system 10. The data 38 may be obtained from any suitable location or source storing such data for the various system objects 12, such as a database, a cloud location, or a local file (of any suitable type or format) storing records. The data 38 may alternatively be obtained directly from the system objects 12, e.g. using appropriate sensors for detecting values of one or more attributes contributing to the overall state of each object 12.

The first detection module 30 may receive the object state data 38 over any suitable time period. For instance, the first detection module 30 may receive the data 38 indicative of a current state of each of the objects 12 at predetermined time intervals. Such time intervals may be any suitable period depending on the particular system being monitored. For instance, the frequency at which the data 38 is received may depend on how often the objects 12 in the system 10 typically change state.

The object state data 38 received by the first detection module 30 may be the state itself of each of the objects 12. Alternatively, the object state data 38 may include up-to-date values of attributes of each object 12, and the first detection module 30 then determines the state of each object 12 based on the received attribute values.

The first detection module 30 is configured to detect changes in state of any of the objects 12 in the system 10 based on the received object state data 38. In one example, details of each of the objects 12 in the system 10 are input to the first detection module 30, for instance from a datastore storing said details. In addition, the first detection module 30 receives the object state data 38 indicating a state of each of the objects 12 at a given time. The first detection module 30 then waits until a change in the state of at least one of the objects 12 is detected. In the described example, this is achieved by comparing the object state data 38 for a particular object 12 received at different points in time, i.e. indicative of the state of the particular object 12 at different points in time, e.g. at consecutive intervals of predetermined time intervals at which the data 38 is received.

One or more objects 12 for which the first detection module 30 detects a change in state may be referred to as first objects in the system 12. More than one object 12 can be determined to be a first object 12 if the state of more than one object 12 changes either simultaneously or within a specified period of one another. Specifically, in the described example the data 38 indicative of the state of each of the plurality of system objects 12 is received at a given time, and the first detection module 30 compares the state of each of the plurality of system objects 12 at the given time with the state of the respective system object 12 at a time prior to the given time in order to detect the change in state of the at least one first system object.

The first modification module 32 - or personalised action recommendation module - receives a result of the processing performed by the first detection module 30, in particular it receives the identified one or more first objects 12 for which a change in state has been determined. The first modification module 32 is for determining a modifying action that is to be applied to the one or more identified first objects 12 in response to the detected change in state. In particular, the first modification module 32 may determine a personalised modifying action to be applied to each of the first objects 12 to improve or restore the state of the respective first object 12.

In the described example, for each of the identified first objects 12 the first modification module 32 retrieves, from the database 22, each of the possible modifying actions that can be applied to each respective first object 12. From these possible modifying actions, the first modification module 32 selects one of these to be applied to the particular first object 12 under consideration in response to the detected change in state.

In some cases, it may be the case that not all of the modifying actions retrieved from the database 22 are suitable for application or implementation at a particular time, or when the first object 12 is in a particular state. In such cases, the first modification module 32 first computes or extracts those retrieved modifying actions that are suitable or appropriate for application in the circumstances - e.g. the particular object, its state, the particular time, etc. - and then selects the first modifying action that is to be applied to the first object 12 from the computed, suitable actions.

In the described example, for each first object 12 the first modification module 32 determines which of the retrieved, possible modifying actions may be considered to be an optimal modifying action as the modifying action to be applied to the particular first object 12. This modifying action is optimal in the sense that it is somehow considered to be the best or most appropriate action to apply to that particular first object 12 when taking only that particular first object 12 into account. In this way, the first modifying action is personalised to the respective first object 12, and is determined according to local considerations of that first object 12. The first modification module 32 may separately determine a first modifying action for each of the one or more first objects 12.

The first modifying action may, for instance, be selected on the basis of being the modifying action most likely, or most appropriate, for restoring or correcting the (changed) state of a particular first object 12 back to its previous state. More generally, the first modifying action may be selected on the basis of it providing the greatest improvement in some aspect of the particular first object 12 according to some local measurement based on the state of the first object 12, e.g. some measurement of performance - possibly relative to a required or desired performance - of the first object 12 according to an appropriate metric based on its state.

The first modification module 32 outputs the one or more first modifying actions 40 to be applied to the respective first object 12. The first modification module 32 may output a control signal to control the first objects 12 in accordance with the respective first modifying actions 40. Alternatively, the first modification module 32 may output the one or more first modifying actions 40 as an instruction to a system operator, for instance on to a user interface on a system computer, or to an application of a mobile or tablet device. More generally, the one or more first modifying actions 40 are output to any suitable source for applying the actions to the respective one or more first objects 12.

The second detection module 34 - or propagation detection module - may receive an indication from the first modification module 32 that the one or more first modifying actions 40 to be applied have been output by the controller 20. The second detection module 34 receives data 42 indicative of the state of the objects 12 of the system 10 after the one or more first modifying actions 40 have been applied. The data 42 may be obtained by the second detection module 34 in a similar manner, or from the same or equivalent source, as the object state data 38 obtained by the first detection module 30.

The second detection module 34 is for detecting which objects 12 in the system 10 are affected by the application of the first modifying actions 40. In particular, the second detection module 34 is for identifying which of the objects 12 in the system 10 other than the one or more first objects have experienced a change in state as a result of, or in response to, the first modifying actions being applied to the first objects 12. In this way, the second modification module 34 detects propagation effects, or secondary effects, throughout the system 10 caused by modification actions applied to certain system objects 12.

In the described example, the object state data 42 received by the second detection module 34 includes data indicative of the state of each of the objects 12 in the system 10 other than the one or more first objects. Alternatively, the second detection module 34 may receive object state data for each of the system objects 12 and filter out the data relating to the first objects 12.

As the object state data 42 is used to indicate any state changes caused by application of the one or more first modifying actions, then the object state data 42 needs to reflect the state of the objects 12 in the system 10 after sufficient time has passed to allow the first modifying actions to propagate through the system 10. That is, the object state data 42 reflects the state of the system objects 12 after any secondary effects as a result of the first modifying actions have had time to be realised.

The amount of time needed to allow effects of the first modifying actions to propagate through the system 10 may be different for different types of system. For instance, in some systems the propagation effects on the state of other system objects may be substantially instantaneous, whereas in some other systems the controller 20 may need to wait a prescribed amount of time for propagation effects to be realised before retrieving the states of the objects such that the retrieved states take into account any propagation effects.

The second detection module 34 is configured to compare the object state data 42 after propagation effects of the first modifying actions 40 have occurred against object state data prior to the application of the first modifying actions 40, e.g. the object state data 38 received by the first detection module 30. In particular, the second detection module 34 identifies those system objects 12 (other than the first objects) whose state has changed relative to prior to the first modifying actions 40 being applied.

One or more objects 12 for which the second detection module 34 detects a change in state may be referred to as second objects in the system 12. That is, each of the objects 12 in the system 10 - other than the first objects - where its state after application of the first modifying actions 40 is not equal to its state prior to the first modifying actions, are recorded as second objects 12.

The second modification module 36 - or mitigating action recommendation module - receives a result of the processing performed by the second detection module 34, in particular it receives the identified one or more second objects 12 for which a change in state has been determined. The second modification module 36 is for determining one or more so-called second modifying actions to be applied to the system 10 as a response to propagation effects through the system 10 caused by the first modification module 32.

The one or more second modifying actions are actions to be applied to the one or more identified second objects. In the described example, a single second modifying action is determined for application to each of the second objects; however, in different examples, a separate, personalised second modifying action may be determined and applied to each of the second objects 12. Alternatively, or in addition, the second modifying actions may include modifying one or more constraints governing operation of the system 10.

The determination and application of the second modifying action is to improve overall performance of the system 10, in particular to mitigate any adverse or negative effects that application of the one or more first modifying actions has on overall system performance. That is, whereas the first modifying actions are determined and applied to provide local improvement in individual objects 12 in the system 10, the second modifying actions are determined and applied to provide global improvement in the system 10. Specifically, overall system performance is some measure of the system 10 according to one or more metrics whose value may be calculated using the state of each of the objects 12 in the system 10.

In the described example, the second modification module 36 retrieves, from the database 22, each of the possible modifying actions that can be applied to one or more second objects 12. From these possible modifying actions, the second modification module 36 determines one of these to be applied to the second objects 12 as a response to the detected change in state of the second objects 12 caused by propagation effects of the first modifying actions 40.

Similarly to the above for the first modifying action, in some cases it may be the case that not all of the modifying actions retrieved from the database 22 are suitable for application or implementation at a particular time, or when the second objects 12 are in a particular state. In such cases, the second modification module 36 first computes or extracts those retrieved modifying actions that are suitable or appropriate for application in the circumstances - e.g. the particular object, its state, the particular time, etc. - and then determines the second modifying action that is to be applied to the second objects 12 from the computed, suitable actions.

The second modification module 36 defines an objective aggregate function to determine the second modifying action to be applied. In particular, the aggregate function is used to determine which of the retrieved, suitable modifying actions is the optimal modifying action in the sense that it results in the greatest improvement in overall system performance when applied to the second objects 12. That is, the state of each of the second objects that would result by application of a given possible second modifying action is used - along with the current state of each of the other system objects 12 - to calculate the one or more performance metrics to obtain overall system performance, and the system performance is optimised across the various possible second modifying actions to determine a particular second modifying action to be applied. Note that in the described example the determined second modifying action may or may not be an optimal modifying action for any given one of the second objects, but rather results in the optimal effect at a system level in terms of system performance according to the defined metric(s).

The second modification module 36 outputs the second modifying action 44 to be applied to each of the identified second objects. Similarly to the first modification module 32, the second modification module 36 may output a control signal to control the second objects 12 in accordance with the second modifying action. Alternatively, the second modification module 36 may output the second modifying action 44 via a user interface on a system computer, or to an application of a mobile or tablet device. More generally, the second modifying action is output to any suitable source for applying the actions to the second objects 12.

As a non-limiting example of a system to which the functional controller 20 can be applied, consider an electrical microgrid in which a transformer is designed to provide a maximum power load to a network of users or nodes. One aspect of performance that may be monitored for such a system is network stability. The different network users or nodes are the system objects 12, and a state of each of the network nodes may be defined by whether an amount of power being demanded by the respective node is being met or satisfied.

If there is a sudden increase in demand by one of the network users - for instance, a single user switches on multiple air conditioners at the same time, or connects their motor vehicle to the network to charge its battery - then the system needs to react to satisfy this changed demand. In this example, the network user with the increased demand is the 'first object' in the system, and the state of this network user changes from a state in which its electrical demand is being met to a state in which its electrical demand from the network is no longer being met (because its demand has increased).

As a 'first modifying action' in response to this change in state, the power supplied to the network user with increased demand ('first object') is increased to meet said increased demand. In turn, this corrective action causes the state of the network user to return to a state in which its demand is once again being met.

However, as the transformer provides a maximum power load to the network, then the increased power supplied to the network user having increased demand has the consequential effect that the power demand of other users in the network is not met consistently. This is because of network instability caused by the increased demand of the 'first' user. The state of those other users - i.e. 'second' users - therefore changes from a state in which their power demand is being met to a state in which their power demand is no longer being met. A reduction in network stability across different users in this manner is characterised as a reduction in overall performance of the network/system.

To reduce the adverse effect on network performance caused by the increased power supplied to the 'first' user, those (second) users whose power demand is no longer being met consistently are incentivised to reduce their power consumption. That is, if the second users reduce their power demand to a level such that the network can once again consistently meet the demands of all of the users, the state of each of the 'second' users will return to a state in which power demand is being met. In turn, this causes network stability to increase leading to an increase in overall system performance. In this case, the incentives provided to the 'second' users are the 'second modifying actions'. An example of such an incentive would be to change the cost per unit of power being supplied to the second users to drive a reduction in demand. Alternatively, the second modifying action could be to increase the maximum power that the transformer can provide to the network so that the demands of all of the nodes can be satisfied while maintaining network stability. Such a second modifying action effectively changes a constraint under which the network operates.

As another non-limiting example of a system to which the functional controller 20 can be applied, consider a water network for suppling water to a local cluster of users. In particular, the amount of water that can be supplied to the cluster is constrained by an amount of water available in a supply reservoir of the cluster.

If there is a large increase in demand for water by one of the users in the cluster, then a 'first' modifying action to increase the amount of water supplied to this 'first' user is applied. This returns the state of the 'first' user to a state in which its demand is satisfied from a state in which its demand is not being satisfied (caused by the increase in demand).

An effect of providing more water to the 'first' user in the network cluster on other users is then monitored. For instance, it may be the case that the amount of water in the storage reservoir of the network cluster is such that providing more water to the 'first' user means that there is not sufficient water to meet the demand of certain other users. In such a case, those users - i.e. 'second' users - undergo a change in state from a state in which demand is being met to a state in which demand is no longer being met. This will cause a reduction in performance of the system according to any metric measuring whether demand across the system is being satisfied.

In order to counteract the negative propagation effects on the 'second' users of the 'first modifying action' of providing more water to the 'first' user, a 'second modifying action' is determined to improve overall system performance. In one example, such a second modifying action could be to reduce the supply water pressure to the 'second' users from the reservoir. This would mean that the demand of the 'second' users decreases such that the state of the 'second' users returns to a state in which their demand for water is being satisfied. In turn, overall system performance according to a metric measuring whether demand is satisfied across the network therefore increases.

Note that the above example of a 'second modifying action' is an action applied to the determined 'second' users. Alternatively, or in addition, a 'second modifying action' to reduce aggregate effects of the 'first modifying action' may be applied to another aspect of the system. For instance, the amount of water in the supply reservoir to the network cluster may be increased. This would allow the demand of the 'second' users to continue to be met even with the increased demand from the 'first' user. Such a change in the amount of water in the reservoir would constitute a change in one of the constraints in the system to aid overall system performance.

As a further non-limiting example of a system to which the functional controller 20 can be applied, consider an organisation in which an aspect of its overall performance is a measure of employee attrition within the company. High levels of employee attrition are undesirable because of the loss of experience and knowledge from the company, and also the costs in hiring a replacement. The different employees within a particular team may be considered to be the system objects.

If a first one of the employees is considering leaving the organisation, this may be regarded as the state of the employee changing from a state in which they are happy with their position in the company to a state in which they are no longer happy with their position in the company. An employee can have many different attributes that contribute to their state of happiness, e.g. age, gender, salary band, experience, sector, team size, average team seniority, etc., and these attributes can change over time. If an employee is unhappy then they are at increased risk of leaving the company. In response to this change in state this 'first' employee a modifying or corrective (first) action may be taken, e.g. offering the first employee a promotion, increasing their salary to a salary band (bracket) above their current level, etc.

As an unintended consequence of applying this first modifying action to the first employee, one or more other employees within the particular team may become unhappy as a result of the first employee receiving a promotion, for instance. That is, the state of one or more 'second' employees in the team changes to a state in which they are unhappy within the company. The organisational performance according to an employee attrition metric may therefore decrease.

To mitigate the overall negative effects on the team or organisation as a result of the action (e.g. promotion) applied to the first employee, a 'second' modifying or corrective action is applied to the 'second' employees. For instance, relatively small in-band (in-bracket) salary increases may be offered to each of the 'second' employees. This may be sufficient to return the state of the 'second' employees to a state in which they are once again happy with their position within the organisation - which results in an increase in overall company performance according to an employee attrition metric - while still operating within the budgeting constraints of the company. Other corrective actions are also possible, e.g. providing training to employees to develop new skills, moving a particular employee to a different team/manager, etc.

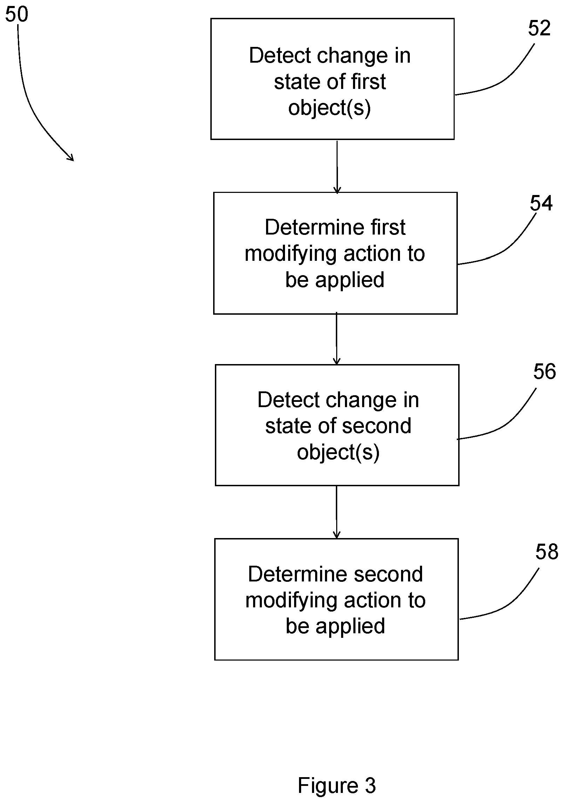

Figure 3 summarises the steps of a method 50 performed by the controller 20. At step 52, a change in state in one or more first objects in the plurality of system objects 12 is detected. This is performed by the first detection module 30 which detects whether the state of any of the objects 12 in the system 10 has changed by comparing temporally successive states of each object 12 based on data received by the controller 20.

At step 54, a modifying or corrective action to be applied to the determined one or more first objects 12 that have undergone a change in state is determined. In some examples, a modifying action may only be determined and applied to a particular 'first' object 12 if the associated change in state of that first object is considered to be a negative or adverse change for local object performance. The first modification module 32 determines as the first modifying action to be applied to the first object a modification that is optimal - in terms of its effect on the local performance of the first object - from a list of possible modifying actions retrieved by the controller 20.

At step 56, a change in state in one or more second objects - different from the first objects - in the plurality of system objects 12 is detected, the change in state being caused by application of the first modifying action to the first object. That is, the effects of the applied first modifying action has a propagating effect through the system 10 to affect objects 12 other than the first object. Analogously to step 52, this may performed by the second detection module 34 which detects whether the state of any of the objects 12 in the system 10 has changed by comparing temporally successive states of each object 12 based on data received by the controller 20. In particular, the state of each object before and after application of the first modifying action is compared.

At step 58, a second modifying or corrective action to be applied to the system 10 is determined. The second modifying action may be determined and applied only if the first modifying action adversely affects overall system performance according to a performance metric. That is, the system performance after application of the first modifying action is compared with the system performance prior to the first modifying action, and further modifying action is only performed if there has been a decrease in system performance, or decrease by a prescribed amount.

The second modification module 36 determines as the second modifying action to be applied to the system a modification that is optimal - in terms of its effect on the global performance of the system 10 of objects 12 - from a list of possible modifying actions retrieved by the controller 20. This 'second' modifying action can be applied to the determined second objects and/or to one or more constraints defining operation of the system 10. For instance, a constraint of the system 10 may includes an amount of resources available in the system. The second modifying action could be to modify one or more constraints in the system 10. Alternatively, the constraints may be fixed and the second modifying action can be determined and applied to the second objects 12 while the overall system 12 still operates within these constraints.

Many modifications may be made to the above-described examples without departing from the scope of the appended claims.

In the above-described examples, a mitigating action is always determined and applied to the identified second objects irrespective of the propagating effect that the first modifying action through the system. There may be certain scenarios in which application of the first modifying action causes propagation effects that have an overall positive impact on system performance. In such cases, it may not be desirable to determine and apply second modifying actions to objects that have experienced propagation effects as a result of the first modifying actions. As such, in some examples system performance according to a performance metric may be determined prior to and after application of the first modifying actions and, if system performance is improved after the first modifying actions relative to prior to these actions, then the controller may be configured to not determine and apply any second modifying actions. More generally, in some examples second modifying actions may be determined and applied only if system performance deteriorates by a prescribed amount, or improves by less than a prescribed amount, as a result of application of first modifying actions.

In the above-described examples, the first modifying action is applied to the one or more first objects, the propagating effects on one or more second objects are determined, and then the second modifying action is determined and applied to the second objects. In different examples, the determined first modifying action may be used to predict an (unknown or uncertain) propagation effect through the system - i.e. which objects other than the first objects will experience propagating effects, and what those effects would be - and to determine second modifying action based on the prediction, and to then output the first and second modifying actions to be applied to the first and second objects, respectively. The actual propagation effects of the first and second modifying actions may then be monitored and fed back to the system, which in certain cases could update the first and/or second modifying actions in dependence on the monitored effects in order to (further) improve overall system performance.

Examples of the present disclosure are advantageous in that they provide a system and method in which uncertain and unforeseeable adverse effects on the global performance of an overall system, caused by actions actively applied to certain objects within the system to improve their local performance, are mitigated against by the application of aggregate or secondary actions to the system. In particular, the disclosure advantageously provides a system for mitigating risk created by actively-defined, externally-applied actions to one or objects within the system whose effects propagate through the system to other objects in an unforeseeable manner. Advantageously, the knowledge gained from monitoring the propagation effects of a modifying action in the system - in particular, which (secondary) objects are affected by the initial modifying action - is used to define an aggregate action to improve overall system performance in a more predictable manner than is possible for the initial action.

## Claims

1. A controller (20) for controlling a system (10) having a plurality of system objects (12), the controller being for controlling system performance according to a performance metric based on a state of each of the system objects, the controller comprising one or more processors configured to implement:
a first detection module (30) configured to detect a change in state of at least one first object from the plurality of system objects;
a first modification module (32) configured to determine a first modifying action (40) to the at least one first object in response to the detected change in state, and to output the first modifying action to be applied to the at least one first object;
a second detection module (34) configured to detect a change in state of at least one second object from the plurality of system objects different from the at least one first object, after the first modifying action is applied to the at least one first object; and,
a second modification module (36) configured to determine a second modifying action (44) to be applied to the system to improve system performance according to the performance metric after the first modifying action is applied, and to output the second modifying action to be applied to the system.

2. A controller according to Claim 1, wherein the second modifying action includes a modification to be applied to the at least one second object.

3. A controller according to any previous claim, wherein the second detection module is configured to receive data (42) indicative of the state of each of the plurality of system objects after the first modifying action has been applied, and compare the received state of each of the plurality of system objects other than the at least one first system object with the state of the respective system object prior to the first modifying action being applied in order to detect the change in state of the at least one second system object.

4. A controller according to any previous claim, wherein the second modification module is configured to determine the second modifying action (44) from a plurality of candidate second modifying actions retrieved by the second modification module.

5. A controller according to claim 4, wherein the determined second modifying action is an optimal modifying action for the system performance according to the performance metric selected from the plurality of candidate second modifying actions.

6. A controller (20) according to any previous claim, wherein the detected change in state of the at least one second object corresponds to an indication that a demand of resources from the system is no longer being met.

7. A controller (20) according to any previous claim, wherein the second modification module is configured to determine the system performance according to the performance metric after the first modifying action is applied, and wherein the second modification module is configured to determine the second modifying action only if the determined system performance has decreased from prior to the first modifying action being applied.

8. A controller (20) according to any previous claim, wherein the first detection module is configured to receive data indicative of the state of each of the plurality of system objects at a given time, and to compare the state of each of the plurality of system objects at the given time with the state of the respective system object at a time prior to the given time in order to detect the change in state of the at least one first system object

9. A controller (20) according to any previous claim, wherein the first modification module is configured to determine the first modifying action from a plurality of candidate first modifying actions retrieved by the first modification module.

10. A controller (20) according to any previous claim, wherein the detected change in state of the at least one first object corresponds to a detected change in demand of resources by the at least one first object provided by the system and
the first modifying action is to satisfy the detected changed demand of resources.

11. A controller (20) according to any previous claim, wherein each system object has one or more attributes each having a value that is variable over time, the state of each system object being defined by the value of each of its attributes at a given time, and the change in state of one of the system objects corresponds to a change in the value of at least one of its attributes.

12. A computer-implemented method (50) for controlling a system (10) having a plurality of system objects (12), the method being for controlling system performance according to a performance metric based on a state of each of the system objects, the method comprising:
receiving data indicative of a change in state of at least one first object from the plurality of system objects;
determining (54) a first modifying action to the at least one first object in response to the detected change in state, and outputting the first modifying action to be applied to the at least one first object;
receiving data indicative of a change in state of at least one second object from the plurality of system objects different from the at least one first object after the first modifying action is applied to the at least one first object; and,
determining (58) a second modifying action to be applied to the system to mitigate an adverse change in system performance after the first modifying action, and outputting the second modifying action to be applied to the system.

13. A non-transitory, computer-readable storage medium storing instructions thereon that when executed by one or more processors causes the one or more processors to perform the method according to Claim 12.

## Patentansprüche

1. Steuerung (20) zur Steuerung eines Systems (10), das eine Vielzahl von Systemobjekten (12) aufweist, wobei die Steuerung zur Steuerung von Systemleistung gemäß einer Leistungsmaßzahl auf der Grundlage eines Zustands eines jeden der Systemobjekte dient, wobei die Steuerung einen oder mehrere Prozessoren umfasst, die zum Implementieren von Folgenden konfiguriert sind:
einem ersten Erkennungsmodul (30), das zum Erkennen einer Zustandsänderung mindestens eines ersten Objekts aus der Vielzahl von Systemobjekten konfiguriert ist; einem ersten Modifizierungsmodul (32), das zum Ermitteln einer ersten Modifizierungsaktion (40) an dem mindestens einen ersten Objekt als Reaktion auf die erkannte Zustandsänderung und zum Ausgeben der ersten Modifizierungsaktion, die auf das mindestens eine erste Objekt angewendet werden soll, konfiguriert ist;
einem zweiten Erkennungsmodul (34), das zum Erkennen einer Zustandsänderung mindestens eines zweiten Objekts aus der Vielzahl von Systemobjekten konfiguriert ist, das sich von dem mindestens einen ersten Objekt unterscheidet, nachdem die erste Modifizierungsaktion auf das mindestens eine erste Objekt angewendet wurde; und einem zweiten Modifizierungsmodul (36), das zum Ermitteln einer zweiten Modifizierungsaktion (44), die auf das System angewendet werden soll, um Systemleistung gemäß der Leistungsmaßzahl zu verbessern, nachdem die erste Modifizierungsaktion angewendet wurde, und zum Ausgeben der zweiten Modifizierungsaktion, die auf das System angewendet werden soll, konfiguriert ist.

2. Steuerung nach Anspruch 1, wobei die zweite Modifizierungsaktion eine Modifizierung einschließt, die auf das mindestens eine zweite Objekt angewendet werden soll.

3. Steuerung nach einem der vorhergehenden Ansprüche, wobei das zweite Erkennungsmodul zum Empfangen von Daten (42), die den Zustand eines jeden der Vielzahl von Systemobjekten angeben, nachdem die erste Modifizierungsaktion angewendet wurde, und zum Vergleichen des empfangenen Zustands eines jeden der Vielzahl von Systemobjekten außer dem mindestens einen ersten Systemobjekt mit dem Zustand des jeweiligen Systemobjekts, bevor die erste Modifizierungsaktion angewendet wurde, um die Zustandsänderung des mindestens einen zweiten Systemobjekts zu erkennen, konfiguriert ist.

4. Steuerung nach einem der vorhergehenden Ansprüche, wobei das zweite Modifizierungsmodul zum Ermitteln der zweiten Modifizierungsaktion (44) aus einer Vielzahl von zweiten Kandidaten-Modifizierungsaktionen, die durch das zweite Modifizierungsmodul abgerufen wurden, konfiguriert ist.

5. Steuerung nach Anspruch 4, wobei die ermittelte zweite Modifizierungsaktion eine optimale Modifizierungsaktion für die Systemleistung gemäß der Leistungsmaßzahl ist, die aus der Vielzahl von zweiten Kandidaten-Modifizierungsaktionen ausgewählt wurde.

6. Steuerung (20) nach einem der vorhergehenden Ansprüche, wobei die erkannte Zustandsänderung des mindestens einen zweiten Objekts einer Angabe entspricht, dass ein Ressourcenbedarf des Systems nicht mehr erfüllt wird.

7. Steuerung (20) nach einem der vorhergehenden Ansprüche, wobei das zweite Modifizierungsmodul zum Ermitteln der Systemleistung gemäß der Leistungsmaßzahl, nachdem die erste Modifizierungsaktion angewendet wurde, konfiguriert ist und wobei das zweite Modifizierungsmodul zum Ermitteln der zweiten Modifizierungsaktion nur dann konfiguriert ist, wenn die ermittelte Systemleistung im Vergleich zu der Zeit abgenommen hat, bevor die erste Modifizierungsaktion angewendet wurde.

8. Steuerung (20) nach einem der vorhergehenden Ansprüche, wobei das erste Erkennungsmodul zum Empfangen von Daten, die den Zustand eines jeden der Vielzahl von Systemobjekten zu einem bestimmten Zeitpunkt angeben, und zum Vergleichen des Zustands eines jeden der Vielzahl von Systemobjekten zu dem bestimmten Zeitpunkt mit dem Zustand des jeweiligen Systemobjekts zu einem Zeitpunkt vor dem bestimmten Zeitpunkt, um die Zustandsänderung des mindestens einen ersten Systemobjekts zu erkennen, konfiguriert ist

9. Steuerung (20) nach einem der vorhergehenden Ansprüche, wobei das erste Modifizierungsmodul zum Ermitteln der ersten Modifizierungsaktion aus einer Vielzahl von ersten Kandidaten-Modifizierungsaktionen, die durch das erste Modifizierungsmodul abgerufen wurden, konfiguriert ist.

10. Steuerung (20) nach einem der vorhergehenden Ansprüche, wobei die erkannte Zustandsänderung des mindestens einen ersten Objekts einer erkannten Änderung des Ressourcenbedarfs durch das mindestens eine erste Objekt entspricht, das durch das System bereitgestellt wird, und die erste Modifizierungsaktion darin besteht, den erkannten geänderten Ressourcenbedarf zu befriedigen.

11. Steuerung (20) nach einem der vorhergehenden Ansprüche, wobei jedes Systemobjekt ein oder mehrere Attribute aufweist, die jeweils einen im Laufe der Zeit veränderlichen Wert aufweisen, wobei der Zustand jedes Systemobjekts durch den Wert eines jeden seiner Attribute zu einem bestimmten Zeitpunkt definiert ist und die Zustandsänderung eines der Systemobjekte einer Änderung des Werts mindestens eines seiner Attribute entspricht.

12. Computerimplementiertes Verfahren (50) zur Steuerung eines Systems (10), das eine Vielzahl von Systemobjekten (12) aufweist, wobei das Verfahren zur Steuerung von Systemleistung gemäß einer Leistungsmaßzahl auf der Grundlage eines Zustands eines jeden der Systemobjekte dient, wobei das Verfahren Folgendes umfasst:
Empfangen von Daten, die eine Zustandsänderung mindestens eines ersten Objekts aus der Vielzahl von Systemobjekten angeben;
Ermitteln (54) einer ersten Modifizierungsaktion an dem mindestens einen ersten Objekt als Reaktion auf die erkannte Zustandsänderung und Ausgeben der ersten Modifizierungsaktion, die auf das mindestens eine erste Objekt angewendet werden soll;
Empfangen von Daten, die eine Zustandsänderung mindestens eines zweiten Objekts aus der Vielzahl von Systemobjekten angeben, das sich von dem mindestens einen ersten Objekt unterscheidet, nachdem die erste Modifizierungsaktion auf das mindestens eine erste Objekt angewendet wurde; und
Ermitteln (58) einer zweiten Modifizierungsaktion, die auf das System angewendet werden soll, um eine nachteilige Änderung der Systemleistung nach der ersten Modifizierungsaktion abzumildern, und Ausgeben der zweiten Modifizierungsaktion, die auf das System angewendet werden soll.

13. Nichtflüchtiges computerlesbares Speichermedium, auf dem Anweisungen gespeichert sind, die, wenn sie durch einen oder mehrere Prozessoren ausgeführt werden, den einen oder die mehreren Prozessoren veranlassen, das Verfahren nach Anspruch 12 durchzuführen.

## Revendications

1. Contrôleur (20) permettant de contrôler un système (10) ayant une pluralité d'objets systèmes (12), le contrôleur étant destiné à contrôler des performances systèmes selon une mesure de performances basée sur un état de chacun des objets systèmes, le contrôleur comprenant un ou plusieurs processeurs configurés pour mettre en œuvre :
un premier module de détection (30) configuré pour détecter un changement d'état d'au moins un premier objet parmi la pluralité d'objets systèmes ;
un premier module de modification (32) configuré pour déterminer une première action de modification (40) sur l'au moins un premier objet en réponse au changement d'état détecté, et pour fournir la première action de modification à appliquer sur l'au moins un premier objet ;
un second module de détection (34) configuré pour détecter un changement d'état d'au moins un second objet parmi la pluralité d'objets systèmes qui est différent de l'au moins un premier objet, après que la première action de modification a été appliquée à l'au moins un premier objet ; et
un second module de modification (36) configuré pour déterminer une seconde action de modification (44) à appliquer au système pour améliorer la performance du système en fonction de la mesure de performances après que la première action de modification a été appliquée, et pour fournir la seconde action de modification à appliquer au système.

2. Contrôleur de la revendication 1, dans lequel la seconde action de modification comprend une modification à appliquer à l'au moins un second objet.

3. Contrôleur de l'une quelconque des revendications précédentes, dans lequel le second module de détection est configuré pour recevoir des données (42) indiquant l'état de chaque objet parmi la pluralité d'objets systèmes après que la première action de modification a été appliquée, et pour comparer l'état reçu de chaque objet parmi la pluralité d'objets systèmes autre que l'au moins un premier objet système avec l'état de l'objet système respectif avant que la première action de modification ne soit appliquée afin de détecter le changement d'état de l'au moins un second objet système.

4. Contrôleur de l'une quelconque des revendications précédentes, dans lequel le second module de modification est configuré pour déterminer la seconde action de modification (44) parmi une pluralité de candidats de secondes actions modifiantes récupérées par le second module de modification.

5. Contrôleur de la revendication 4, dans lequel la seconde action de modification déterminée est une action de modification optimale pour les performances systèmes selon la mesure de performances sélectionnées parmi la pluralité de candidates de secondes actions modifiantes.

6. Contrôleur (20) de l'une quelconque des revendications précédentes, dans lequel le changement d'état détecté de l'au moins un second objet correspond à une indication selon laquelle une demande de ressources du système n'est plus satisfaite.

7. Contrôleur (20) de l'une quelconque des revendications précédentes, dans lequel le second module de modification est configuré pour déterminer les performances du système selon la mesure de performances après que la première action de modification a été appliquée, et dans lequel le second module de modification est configuré pour déterminer la seconde action de modification uniquement si les performances systèmes déterminées ont diminué par rapport à celles précédant l'application de la première action de modification.

8. Contrôleur (20) de l'une quelconque des revendications précédentes, dans lequel le premier module de détection est configuré pour recevoir des données indiquant l'état de chaque objet parmi la pluralité d'objets systèmes à un instant donné, et pour comparer l'état de chaque objet parmi la pluralité d'objets systèmes à l'instant donné avec l'état de l'objet système respectif à un instant antérieur à l'instant donné afin de détecter le changement d'état de l'au moins un premier objet système.

9. Contrôleur (20) de l'une quelconque des revendications précédentes, dans lequel le premier module de modification est configuré pour déterminer la première action de modification parmi une pluralité de candidats des premières actions modifiantes récupérées par le premier module de modification.

10. Contrôleur (20) de l'une quelconque des revendications précédentes, dans lequel le changement d'état détecté de l'au moins un premier objet correspond à un changement détecté de la demande de ressources par l'au moins un premier objet fourni par le système et la première action de modification est destinée à satisfaire la demande de ressources changée détectée.

11. Contrôleur (20) de l'une quelconque des revendications précédentes, dans lequel chaque objet système comprend un ou plusieurs attributs ayant chacun une valeur variable dans le temps, l'état de chaque objet système étant défini par la valeur de chacun de ses attributs à un instant donné, et le changement d'état d'un des objets système correspond à un changement de la valeur d'au moins un de ses attributs.

12. Procédé mis en œuvre par ordinateur (50) pour contrôler un système (10) ayant une pluralité d'objets systèmes (12), le procédé étant destiné à contrôler les performances du système selon une mesure de performances basée sur un état de chacun des objets systèmes, le procédé comprenant :
la réception de données indiquant un changement d'état d'au moins un premier objet parmi la pluralité d'objets systèmes ;
la détermination (54) d'une première action de modification sur l'au moins un premier objet en réponse au changement d'état détecté, et la fourniture de la première action de modification à appliquer sur l'au moins un premier objet ;
la réception de données indiquant un changement d'état d'au moins un second objet parmi la pluralité d'objets systèmes différents de l'au moins un premier objet après que la première action de modification a été appliquée à l'au moins un premier objet ; et
la détermination (58) d'une seconde action de modification à appliquer au système pour atténuer un changement défavorable des performances système après la première action de modification, et la fourniture de la seconde action de modification à appliquer au système.

13. Support de stockage non transitoire, lisible par ordinateur, contenant des instructions qui, lorsqu'elles sont exécutées par un ou plusieurs processeurs, les amènent à réaliser le procédé selon la revendication 12.
